# EUROPEAN PATENT APPLICATION

(11) **EP 1 538 777 A1**
(43) Date of publication of application: **08.06.2005**
(21) Application number: 03293003.4
(22) Date of filing: 01.12.2003
(51) Int. Cl.: H04L 12/24, H04L 29/12

(54) **Configuration management device for a self-configurable network equipment of a communication network provided with equipment configuration parameter consistency analysis module**

(71) Applicant: ALCATEL, 75008 Paris (FR)
(72) Inventor: Marce, Olivier, 91300 Massy (FR); El Mghazli, Yacine, 94110 Arcueil (FR)
(74) Representative: Narmon, Gisèle Marie Thérèse

(57) **Abstract**

A communication network comprises a plurality of self configurable network equipments (R1, R3-R5) each comprising a self-configuration means (SCM) arranged to acquire a new configuration to establish and a configuration management device (D) coupled to the self-configuration means (SCM) and arranged, when it is warned of an acquirement of new configuration parameters by the self-configuration means (SCM), to transmit configuration data representative of these configuration parameters to a network repository (NCR) connected to a network configuration analysis device (CAD). So, the network configuration analysis device (CAD) can check whether transmitted configuration data are consistent with the previously transmitted data representative of the configuration parameters of other self-configurable network equipments of the network (N).

## Description

The present invention relates to communication networks, and more particularly to the configuration of network equipments acting as self-configuration nodes in such networks.

As it is known by one skilled in the art some of the above cited networks, and notably certain IP networks, comprises "self-configurable network equipments" that are able to acquire their own configuration and to compute the corresponding configuration parameters to establish.

In this kind of network it is necessary to gather the configuration parameters that have been locally determined and established in each self-configurable network equipment to check the consistency of their respective configurations at a given time (some configuration parameters can effectively clash) and also to configure the non self-configurable network equipments in a consistent manner with self-configurable network equipment configurations. Without such a consistency a network is not able to route data packets or to offer specific services in a reliable way.

Actually, these networks comprise a management agent that must connect itself to every self-configurable network equipment but also to every non self-configurable network equipment to get their own configuration parameters, usually through SNMP commands. Such a method is time and resource consuming.

Moreover, the management agent needs to know the network equipments that are self-configurable to get the proper parameters from them. So, this does not allow the addition of a new self-configurable network equipment in the network and the automatic gathering of its configuration parameters without a preliminary reconfiguration of the management agent.

So, the object of this invention is to overcome at least one of these drawbacks.

For this purpose, it provides a configuration management device for a self-configurable network equipment comprising a self-configuration means arranged to acquire a new configuration to establish and a configuration management means coupled to the self-configuration means and arranged, when it is warned of an acquirement of new configuration parameters by the self-configuration means, to transmit configuration data representative of these configuration parameters to a network repository that is connected to a network configuration analysis device. So, the network configuration analysis device can check whether transmitted configuration data are consistent with the previously transmitted configuration data representative of the configuration parameters of other self-configurable network equipments of the network.

The configuration management device according to the invention may include additional characteristics considered separately or combined, and notably :
- the configuration management means may be arranged to receive from the network configuration analysis device, following upon a configuration data transmission, a reconfiguration message comprising reconfiguration data representative of configuration parameters that have been modified to be consistent with the configuration parameters of the other self-configurable network equipments, and to transmit the received reconfiguration data to the self-configuration means in order a modified configuration be established,
- the configuration management means may be arranged to transmit a query message, comprising data identifying the self-configuration network equipment, to the network in order to determine the identification data of the repository to which it must transmit the configuration data. In that case the configuration management means may be arranged to query the network in a broadcast or multicast way,
- the configuration management means may be arranged to exchange data with the repository through a communication protocol chosen amongst at least the COPS protocol, SNMP, XMLConf and DHCP,
- the configuration management means may comprise a Policy Enforcement Point (PEP) module arranged to exchange data with a Policy Decision Point (PDP) module of the network configuration analysis device,
- when the network is divided in areas each associated to an area identifier and the self-configurable network equipment is a router, the configuration management device may comprise a routing parameter acquisition means arranged to determine (into the network) area parameters useful to configure the routing protocol area of the router. For example, the routing parameter acquisition means is arranged to determine (into the network) area parameters that are useful to configure the routing protocol area identifier of its router. In that case the routing parameter acquisition means is preferably arranged to determine the area identifier of each network area and the number of self-configurable routers belonging to each network area in order to determine the area to which its router belongs. For example, the routing parameter acquisition means may be arranged to compare each determined number to a chosen threshold associated to the routing protocol, and either to configure the routing protocol area identifier with the area identifier of an area whose router number is lower than this threshold, or to define a new area associated to a new area identifier and configure the routing protocol area identifier with the new area identifier. Moreover, the routing parameter acquisition means may be arranged, after having generated a new area identifier, to inform each network area border router of this new area identifier and that it acts as an area border router for the new area.

The invention also provides a self-configurable network equipment comprising a self-configuration means, arranged to acquire a new configuration to establish, and a configuration management device such as the one above introduced.

The invention also provides a network configuration analysis device, for a communication network, comprising a network configuration analysis means i) adapted to be connected to self-configurable network equipments such as the one above introduced and to at least one network repository in which are stored the transmitted configuration data representative of the configuration parameters of the self-configurable network equipments, and ii) arranged to check whether recently stored configuration data (representative of the configuration parameters of a chosen self-configurable network equipment) are consistent with the stored transmitted configuration data (representative of the configuration parameters of other self-configurable network equipments). So in case of inconsistency the network configuration analysis means determines reconfiguration parameters consistent with the stored configuration parameters of the other self-configurable network equipments for the chosen self-configurable network equipment, and then transmit a reconfiguration message, comprising reconfiguration data representative of the determined reconfiguration parameters, to the self-configurable network equipment.

Such a network configuration analysis means may be adapted to check the consistency and to determine the reconfiguration parameters according to policy rules.

Moreover, the network configuration analysis device may comprise a Policy Decision Point module arranged to exchange data with the Policy Enforcement Point module of the configuration management device of each self-configurable network equipment.

The invention also provides a communication network comprising a multiplicity of self-configurable network equipments such as the one above introduced, at least a network repository arranged to store the transmitted configuration data in correspondence with network equipment identifiers, and at least a network configuration analysis device such as the one above introduced.

Other features and advantages of the invention will become apparent on examining the detailed specifications hereafter and the appended drawings, wherein :
- figure 1 schematically illustrates an example of communication network comprising self-configurable nodes, a configuration repository and a configuration analysis module according to the invention,
- figure 2 illustrates a first embodiment of a self-configurable node according to the invention, and its connections with the configuration repository and the configuration analysis module according to the invention, and
- figure 3 illustrates a second embodiment of a self-configurable node according to the invention, and its connections with the configuration repository and the configuration analysis module according to the invention.

The appended drawings may not only serve to complete the invention, but also to contribute to its definition, if need be.

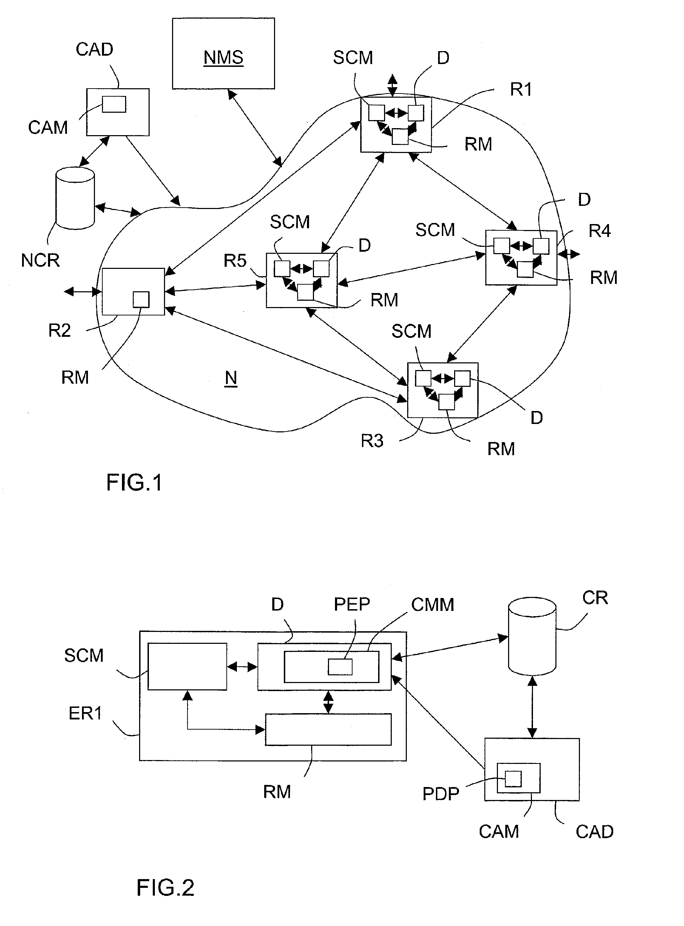

Reference is initially made to figure 1 to describe a communication network comprising self-configurable network equipments (or nodes) each provided with a configuration management device according to the invention, in a non-limiting embodiment.

The communication network N is for example a data network, as an IP network.

Such a network N usually comprises a multiplicity of network equipments such as routers that each constitute a network node and that are adapted to route data packets between other routers, communication terminals or servers that are linked to them.

In the illustrated example, the network N only comprises five routers R1 to R5 connected one to the other. But an IP network usually comprises much more routers.

The invention concerns the network equipments (or nodes) that are self-configurable. But, as illustrated, self-configurable and non self-configurable network equipments may coexist in the network N. More precisely in the illustrated network N there are four self-configurable network equipments (or nodes) R1, R3, R4 and R5 (hereafter named SCN) and one non self-configurable network equipment (or node) R2 (hereafter named NSCN).

As mentioned in the introductory part, a SCN is a node that is capable of self configuration when it acquires a new configuration. In other words, a SCN comprises a self-configuration module SCM adapted to acquire a new configuration, then to compute the corresponding configuration parameters and finally to establish these computed configuration parameters.

A new configuration definition can be sent to a SCN by a network management system NMS (defined hereafter), which means that the self-configuration module SCM receives (or acquires) directly said new configuration without having to intervene, or the self-configuration module SCM analyses the network in order to define (or acquire) a new configuration definition. The self-configuration module SCM is a classical module that is well known by the man skilled in the art. So it will not be described hereafter in details. However some detailed information relative to this module may be found in the document http://www.ietf.org/internet-drafts/draft-marce-zerouter-archi-00.txt.

A NSCN is a node that is only capable to establish received configuration parameters. This type of network equipment (or node) is not directly concerned with the invention.

The network N also comprises a network management system NMS that can send and retrieve data to/from the network equipments R in order to manage the network under control of its administrator.

According to the invention, the network N also comprises at least one configuration repository (or database or else datafiles) NCR adapted to store configuration data, that are transmitted by the SCNs, in correspondence with their respective network equipment identifiers, and at least one configuration analysis device CAD linked to the configuration repository NCR and to the SCNs.

The network N may comprise several configuration repositories NCR. In that case each configuration repository is preferably dedicated to a group of chosen SCNs.

Moreover when the network N comprises several configuration repositories NCR but only one configuration analysis device CAD, the latter is linked to every configuration repository.

As will be detailed above the configuration analysis device CAD is arranged to check the consistency of the configuration data that are representative of the configuration parameters of the SCNs, and in case of inconsistency to determine reconfiguration data to transmit to a SCN.

Each configuration analysis device CAD and/or each configuration repository NCR may eventually belong(s) to the network management system NMS. In that case, they may eventually be integrated in a management server of the NMS.

In order the SCNs could send their configuration data, that are representative of their configuration parameters, they comprise a configuration management device D that is coupled to their self-configuration module SCM. This configuration management device D is arranged, each time it is warned of an acquirement of new configuration parameters by the self-configuration module SCM, to transmit the new configuration data that are representative of these new configuration parameters to the configuration repository NCR that is in charge of storing the configuration data that are established in its SCN.

Each time the configuration repository NCR receives new configuration data from a configuration management device D, it stores them in correspondence with the identifier of its SCN (that is transmit with the data). Then, the configuration repository NCR transmits the received new configuration data to the configuration analysis device CAD (to which it is linked) for a consistency analysis.

The configuration analysis device CAD comprises a configuration analysis module CAM that may be connected to the self-configurable network equipments SCN. "Connected" notably means that the configuration analysis module CAM is able to exchange messages with the self-configurable network equipments SCN.

Each time the configuration analysis module CAM receives new configuration data (and the associated SCN identifier), it queries the configuration repository NCR to get the stored configuration data of the other SCNs. Then the configuration analysis module CAM checks the consistency of the new configuration parameters with the established configuration parameters of the other SCNs.

If the configuration analysis module CAM does not detect any inconsistency, the configuration analysis comes to an end.

If the configuration analysis module CAM detects an inconsistency, it determines the configuration parameters that must be modified and generates reconfiguration data representative of the configuration parameters that must be established by the SCN designated by its identifier. Then, it integrates these reconfiguration data in a reconfiguration message that it transmits to the concerned SCN.

When the concerned SCN receives the reconfiguration message, it is processed by the configuration management device D. More precisely, and as illustrated in the first embodiment in figure 2, the configuration management device D comprises a configuration management module CMM arranged to extract the reconfiguration data from the reconfiguration message and to transmit these reconfiguration data to the self-configuration module SCM in order the corresponding parameters be established. This configuration management module CMM is also in charge of the transmission of the new configuration data to the configuration repository NCR.

Thus the invention allows a self-configuration of the network N without any generalized questioning of every node, or even only every SCN.

In certain circumstances it happens that the configuration management device D did not know the identifier of the configuration repository NCR to which it must transmit the new configuration data computed by the self-configuration module SCM. In these circumstances the configuration management device D must query the network N. For this purpose, the configuration management module CMM is preferably arranged to transmit a query message, comprising data identifying its SCN, to the network configuration repositories NCR. Such a query message may be transmitted in a broadcast or multicast way.

Thus, when a configuration repository NCR receives a query message comprising the identifier of one of the SCNs (for which it is responsible to gather the established configuration data), it transmits to this SCN a response message requesting the transmission of any new configuration data and comprising its own identifier.

The exchange of messages (or data) between a SCN and a configuration repository NCR, but also between a SCN and the configuration analysis device CAD, is preferably carried out through the COPS ("Common Open Policy Service") protocol. But, it is possible to use other communication protocols such as SNMP ("Simple Network Management Protocol"), XMLConf and DHCP ("Dynamic Host Configuration Protocol").

For repository discovery purpose, it is also possible to use SLP ("Service Location protocol"), or any equivalent protocol, or a well known unicast address, or else a static address, or else a DNS, or else a LDAP request, or any known equivalent method.

As it is illustrated in figure 2, in a COPS context (or environment) the configuration management module CMM preferably comprises a Policy Enforcement Point module PEP arranged to control the exchange of message (or data) with a Policy Decision Point module PDP of the configuration analysis module CAM.

The PEP and PDP modules are classical ones that are well known by the man skilled in the art. So they will not be described hereafter. However some detailed information relative to these modules may be found in the document http://www.ietf.org/rfc/rfc2748.txt.

According to another aspect of the invention, the configuration management device D may be in charge of determining (into the network) area parameters useful to configure the routing protocol area of its SCN when it is a router.

Some communication networks, and notably certain IP networks, are effectively divided in several areas that are each associated to an area identifier. This is more especially the case when the routing protocol is OSPF.

As it is known by the one skilled in the art, an area is a set of routers inter working together in order to ease the routing process inside the network N. Each area comprises an area border router (ABR).

In the known networks, the configuration of the routing protocol area is carried out in a manual way in each SCN or through centralized management operations. The manual configuration of the area identifier prevents any automatic (or self) configuration of the routing protocol parameters, and moreover any reconfiguration depending on the network context. The management based configuration relies on the presence of a central manager which distributes the routing parameters to the network routers R. This also prevents any automatic (or self) configuration.

So, this is another object of the present invention to overcome this drawback.

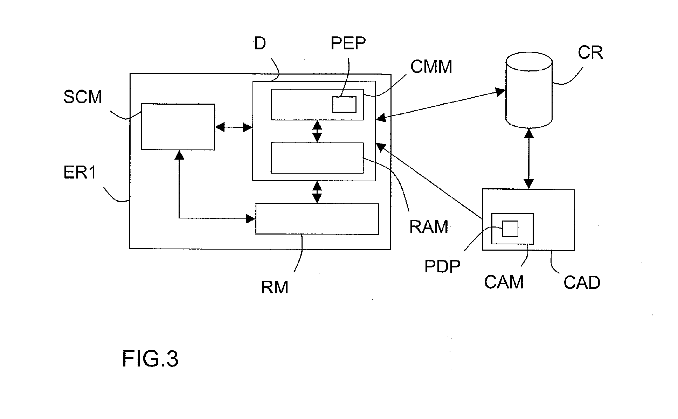

For this purpose and as illustrated in figure 3, the configuration management device D may comprise (in combination with its configuration management module CMM) a routing parameter acquisition module RAM in charge of determining into the network N area parameters useful to configure the routing protocol area of the router that is controlled (as the routing process) by its routing module RM. Such a routing module RM classically determines the routes allowing the transfer of the data packets received by its SCN R1. Usually it is also coupled to the self-configuration module SCM.

For example the routing parameter acquisition module RAM is arranged to determine the area parameters that are useful to configure the routing protocol area identifier of its SCN. But, it could be arranged to get other area parameters, and for example the routing protocols that are used by the other routers (such as BGP).

In case of an area identifier discovery the routing parameter acquisition module RAM is preferably arranged to determine the area identifier of each network area and the number of SCNs that belong to each network area. Such a determination can be done through dedicated OSPF message(s) in a broadcast or multicast way, with a protocol such as HELLO. But the routing parameter acquisition module RAM can also listen to the broadcast messages (when they are not encrypted), that are exchanged by the routers through the network N, in order to determine the area identifiers.

For example the routing parameter acquisition module RAM of a SCN first starts to acquire the identifier of each network area and then questions the other routers to determine how many routers belong to each identified network area. Then the routing parameter acquisition module RAM compares each determined number to a chosen threshold associated to the routing protocol. For example this threshold is defined in the IETF document RFC2329.

If one of the router numbers is lower than the threshold the routing parameter acquisition module RAM configure the routing protocol area identifier of its SCN with the area identifier associated to this router number. On the contrary, if none router number is lower than the threshold the routing parameter acquisition module RAM defines a new area associated to a new area identifier and then configures the routing protocol area identifier of the routing module RM with the newly generated area identifier.

For example the network configuration analysis module CAM is adapted to check the consistency of the configuration data and/or to determine the reconfiguration parameters according to policy rules.

When the routing parameter acquisition module RAM has generated a new area identifier and configured the routing protocol area identifier of its SCN, it preferably transmits this new area identifier to the network area border routers and notifies them that it acts as the area border router of the new area.

The configuration management device D (and more precisely its configuration management module CMM, PEP module and routing parameter acquisition module RAM), the self-configuration module SCM, the routing module RM and the configuration analysis device CAD (and more precisely its configuration analysis module CAM and PDP module) are preferably software modules, but they may be also respectively made of electronic circuit(s) or hardware modules, or a combination of hardware and software modules.

Moreover, the routing parameter acquisition module RAM may eventually constitute a part of the routing module RM. More, the routing module RM and/or the self-configuration module SCM may belong to the configuration management device D.

The invention is not limited to the embodiments of communication network, self-configurable network equipment, configuration management device and configuration analysis device CAD described above, only as examples, but it encompasses all alternative embodiments which may be considered by one skilled in the art within the scope of the claims hereafter.

So, it has been described two examples of self-configurable network equipment adapted to COPS context (environment). But the invention also applies to other contexts using communication protocol such as SNMP, XMLConf and DHCP, and which do not required self-configurable network equipments comprising a PEP module and a configuration analysis device CAD comprising a PDP module.

## Claims

1. Configuration management device (D) for a self-configurable network equipment (R) of a communication network (N), said equipment (R) comprising a self-configuration means (SCM) arranged to acquire a new configuration to establish, **characterized in that** it comprises a configuration management means (CMM) coupled to said self-configuration means and arranged, when warned of an acquirement of new configuration parameters by said self-configuration means (SCM), to transmit configuration data representative of said configuration parameters to a network repository (NCR) connected to a network configuration analysis device (CAD) adapted to check whether they are consistent with transmitted data representative of configuration parameters of other self-configurable network equipments of said network (N).

2. Configuration management device (D) according to claim 1, wherein said configuration management means (CMM) is arranged to receive from said network configuration analysis device (CAD), following upon said configuration data transmission, a reconfiguration message comprising reconfiguration data representative of configuration parameters that have been modified to be consistent with said configuration parameters of said other self-configurable network equipments of said network (N), and to transmit said received reconfiguration data to said self-configuration means (SCM) in order a modified configuration be established.

3. Configuration management device (D) according to one of claims 1 and 2, wherein said configuration management means (CMM) is arranged to transmit a query message, comprising data identifying said self-configuration network equipment (R), to said network (N) to determine identification data of the network repository (NCR) to which it must transmit said configuration data.

4. Configuration management device (D) according to claim 3, wherein said configuration management means (CMM) is arranged to query said network (N) in a broadcast or multicast way.

5. Configuration management device (D) according to one of claims 1 to 4, wherein said configuration management means (CMM) is arranged to exchange data with said network repository (NCR) through a communication protocol chosen in a group comprising at least COPS, SNMP, XMLConf and DHCP.

6. Configuration management device (D) according to one of claims 1 to 5, wherein said configuration management means (CMM) comprises a Policy Enforcement Point module (PEP) arranged to exchange data with a Policy Decision Point module (PDP) of said network configuration analysis device (CAD).

7. Configuration management device (D) according to one of claims 1 to 6, **characterized in that**, when said network (N) is divided in areas each associated to an area identifier and said self-configurable network equipment (R) is a router, it comprises a routing parameter acquisition means (RAM) arranged to determine into said network (N) area parameters useful to configure the routing protocol area of said router (R).

8. Configuration management device (D) according to claim 7, wherein said routing parameter acquisition means (RAM) is arranged to determine into said network (N) area parameters useful to configure the routing protocol area identifier of said router (R).

9. Configuration management device (D) according to claim 8, wherein said routing parameter acquisition means (RAM) is arranged to determine the area identifier of each network area and the number of self-configurable routers belonging to each network area in order to determine the area to which it belongs.

10. Configuration management device (D) according to claim 9, wherein said routing parameter acquisition means (RAM) is arranged to compare each of said determined numbers to a chosen threshold associated to said routing protocol, and either to configure said routing protocol area identifier with the area identifier of an area whose router number is not greater than said threshold, or to define a new area associated to a new area identifier and configure said routing protocol area identifier with said new area identifier.

11. Configuration management device (D) according to claim 10, wherein said routing parameter acquisition means (RAM) is arranged, after having generated a new area identifier, to inform each network area border router of said new area identifier and that it acts as an area border router for said new area.

12. Self-configurable network equipment (R) for a communication network (N), comprising a self-configuration means (SCM) arranged to acquire a new configuration to establish, **characterized in that** it also comprises a configuration management device (D) according to one of claims 1 to 11.

13. Network configuration analysis device (CAD) for a communication network (N), **characterized in that** it comprises a network configuration analysis means (CAM) adapted to be connected to self-configurable network equipments (R) according to claim 12 and to at least one network repository (NCR) of said network (N), in which are stored transmitted configuration data representative of configuration parameters of said self-configurable network equipments (R), and arranged to check whether recently stored configuration data representative of configuration parameters of one chosen of said self-configurable network equipments are consistent with the stored transmitted configuration data representative of configuration parameters of other self-configurable network equipments of said network, and in case of inconsistency to determine reconfiguration parameters consistent with said stored configuration parameters of said other self-configurable network equipments for said chosen self-configurable network equipment, and then transmit a reconfiguration message, comprising reconfiguration data representative of said determined reconfiguration parameters, to said self-configurable network equipment.

14. Network configuration analysis device (CAD) according to claim 13, wherein said network configuration analysis means (CAM) is adapted to check said consistency and to determine said reconfiguration parameters according to policy rules.

15. Network configuration analysis device according to one of claims 13 and 14, wherein it comprises a Policy Decision Point module (PDP) arranged to exchange data with the Policy Enforcement Point module (PEP) of the configuration management device (D) of said self-configurable network equipments (R).

16. Communication network (N), **characterized in that** it comprises a multiplicity of self-configurable network equipments (R) according to claim 12, at least a network repository (NCR) arranged to store the transmitted configuration data in correspondence with network equipment identifiers, and at least a network configuration analysis device (CAD) according to one of claims 13 to 15.
